# EUROPÄISCHE PATENTSCHRIFT

(11) **EP 0 849 118 B1**
(45) Veröffentlichungstag und Bekanntmachung des Hinweises auf die Patenterteilung: **09.04.2003**
(21) Anmeldenummer: 97122018.1
(22) Anmeldetag: 13.12.1997
(51) Int. Cl.: B60Q 1/26, B60Q 1/30

(54) **Fahrzeugleuchte**
Vehicle light
Feu pour véhicule

(30) Priorität: 21.12.1996 DE 19653874
(43) Veröffentlichungstag der Anmeldung: 24.06.1998
(73) Patentinhaber: Volkswagen Aktiengesellschaft, 38436 Wolfsburg (DE)
(72) Erfinder: Müller, Michael, 38518 Gifhorn (DE); Metzker, Albert, 38524 Sassenburg (DE)

(56) Entgegenhaltungen:
- EP-A- 0 531 185
- EP-A- 0 596 782
- DE-U- 8 100 244
- DE-U- 29 613 729

## Beschreibung

Die Erfindung bezieht sich auf die Befestigung von Fahrzeugleuchten. Insbesondere bezieht sie sich auf die Befestigung von Bremsleuchten im Kofferraumdeckel oder am Dachrahmen hinten oberhalb der Heckscheibe.

Für die lichttechnischen Einrichtungen wie Abblendlicht, Fernlicht und Bremslicht müssen an einem Fahrzeug die entsprechenden Fahrzeugleuchten vorgesehen werden. Sofern es sich dabei um die gesetzlich vorgeschriebenen Leuchten wie vordere Scheinwerfer, Heckleuchten oder Bremslichter handelt, die die Sicherheit im Straßenverkehr gewährleisten, müssen diese bei Ausfall austauschbar sein und daher abnehmbar oder in anderer Art und Weise zugänglich angebracht sein. Aus diesem Grund werden im allgemeinen die Fahrzeugleuchten mittels Schrauben oder Clips befestigt, die von außen oder von innen in Bezug auf die Karosserie lösbar sind. Dazu müssen die Leuchten entsprechend ausgelegt sein, indem sie Durchführungsöffnungen für Schrauben oder Einrastteile aufweisen oder mit Einrastteilen wie z. B. mit zwei in entgegengesetzter Richtung gebogenen Spreizarmen, einstückig verbunden sind, die an ihren Enden mit Haken versehen sind. Die Spreizarme greifen in entsprechende Aufnahmelöcher in dem Karosserieteil, in das die Leuchte eingesetzt wird, und halten die Leuchte dort in der gewünschten Position.

Diese Leuchten nach dem Stand der Technik haben den Nachteil, daß die Vorrichtungen für die lösbare Verbindung der Leuchte mit der Karosserie wie z. B. die Spreizarme einmal einen erhöhten Herstellungsaufwand bei der Herstellung der Leuchte und zum anderen einen höheren Arbeitsaufwand bei der Montage der Leuchte an der Karosserie bedeuten. Darüber hinaus müssen bei der Konstruktion von Haltevorrichtungen an der Leuchte oder für die Leuchte und ihrer Gegenstücke Toleranzen der Teile beachtet werden.

Aus der DE 81 00 244 U1, die den Oberbegriff des Anspruchs 1 zeigt, ist es des weiteren bekannt, eine Fahrzeugleuchte mit einer Klebeverbindung an einem Karosserieteil zu befestigen. Die Fahrzeugleuchte weist dazu ein Gehäuse zur Aufnahme einer Glühlampe auf, an dem Klebestreifen mit Klebematerial angeordnet sind. Die beschriebene Befestigungsart ist mit einer Reduzierung des Herstellungs- und Montageaufwandes verbunden. Eine Demontage dieser Fahrzeugleuchte ist jedoch problematisch.

Die Erfindung hat daher zum Ziel, eine Fahrzeugleuchte anzugeben, die einfach zu montieren und zu demontieren und die kostengünstig herzustellen ist.

Dieses Ziel wird mit einer Fahrzeugleuchte nach Anspruch 1 erreicht. Eine vorteilhafte Ausgestaltung ist im Anspruch 2 aufgeführt.

Die Erfindung besteht darin, daß bei einer durch eine Klebeverbindung mit einem Karosserieteil verbindbaren Fahrzeugleuchte, die ein Gehäuse zur Aufnahme einer lichtemittierenden Diode aufweist, an dem mehrere Klebebereiche zur Aufnahme von Klebematerial vorgesehen sind, diese Klebebereiche als Vertiefungen ausgebildet sind, in denen Heizdrähte angeordnet sind, durch die das Klebematerial bis zu seiner Verflüssigung aufheizbar ist. Eine derartig ausgerüstete Fahrzeugleuchte ist einfach zu montieren und durch eine Verflüssigung des Klebematerials auf einfache Weise auch wieder zu demontieren. Überdies ist der Herstellungsaufwand für die Leuchte erheblich reduziert.

Die Klebebereiche können insbesondere so geformt sein, daß das Gehäuse formschlüssig mit einer Aussparung in einem das Gehäuse aufnehmenden Karosserieteil abschließt, d. h. das Klebematerial zerfließt beim Einbau der erfindungsgemäßen Fahrzeugleuchte auf dem Klebebereich in der Art, daß sich mit dem entsprechenden Karosserieteil, in das die Leuchte eingebaut wird, eine glatte Oberfläche ergibt.

Der Erfindungsgedanke beruht darauf, daß ein Abmontieren der Fahrzeugleuchte wegen der sehr viel höheren Lebensdauer der LEDs gegenüber Glühlampen entfällt, weswegen die Verbindung der Leuchte am Fahrzeug nicht mehr lösbar ausgelegt sein muß. Da jedoch ein Lösen der Leuchte vom Fahrzeug nach wie vor ermöglicht werden soll, kann das Klebematerial bei Bedarf durch Aufheizen verflüssigt werden, so daß sich der Kleber von der Klebestelle entfernen läßt und so die Verbindung zwischen Leuchte und Karosserieteil gelöst werden kann.

Der Vorteil der geklebten Leuchte besteht darin, daß durch die Klebeverbindung die Wahl der einsetzbaren Materialien sehr erweitert wird und z. B. ein Leuchtengehäuse aus Kunststoff ohne weiteres mit dem Fahrzeugblech verbunden werden kann, ohne daß eine spezielle Formgebung für das Gehäuse erforderlich ist. Darüber hinaus ist eine Verbindung zwischen Fahrzeugblech und Leuchte möglich, ohne daß Abrißkanten entstehen, die Leuchte kann formschlüssig mit der Karosserie abschließen, ohne daß Schraubenköpfe oder dgl. vorstehen. Es läßt sich eine ideale glatte Oberfläche schaffen.

Zum besseren Verständnis der Erfindung wird im folgenden ein Ausführungsbeispiel der erfindungsgemäßen Leuchte beschrieben, wobei auf die Zeichnungen Bezug genommen wird.
Fig. 1 zeigt eine Bremsleuchte mit drei LEDs als Ausführungsform der erfindungsgemäßen Fahrzeugleuchte für den Einbau in einem Fahrzeug in Seitenansicht;
Fig. 2 zeigt die Leuchte in Fig. 1 in der Vorderansicht.

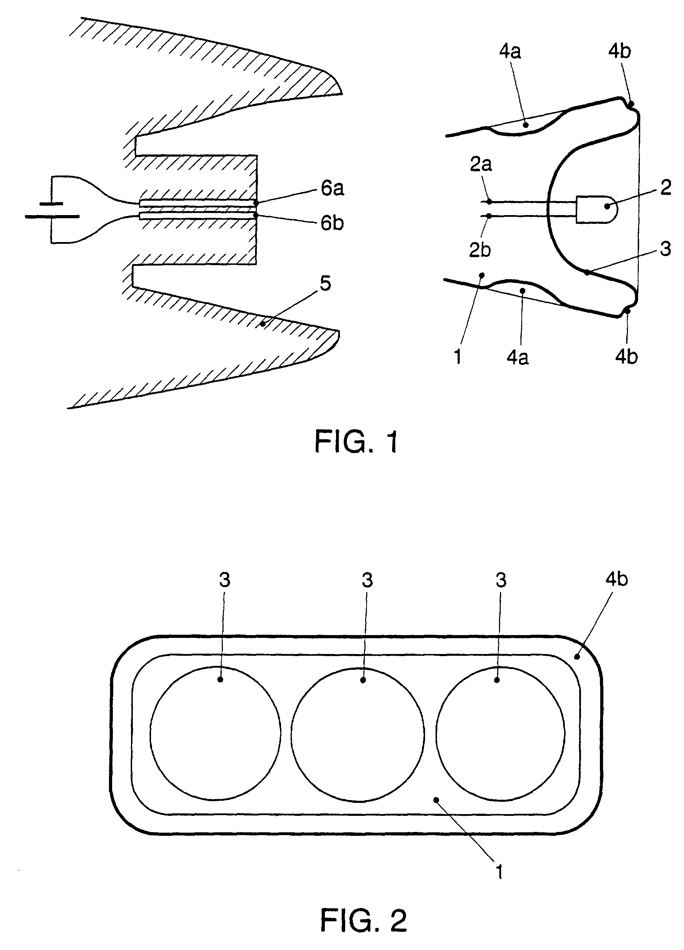

In Fig. 1 ist die Fahrzeugleuchte 1 und das Karosserieteil 5 dargestellt, in das die Leuchte eingebaut werden soll. Die Leuchte 1 umfaßt ein speziell geformtes Gehäuse mit Klebebereichen 4a und 4b, in denen jeweils ein Heizdraht angeordnet ist. Das Gehäuse kann wie dargestellt eine einfaches Plastikspritzgußteil sein, in das eine LED 2 eingegossen ist. Insbesondere kann das Platikspritzgußteil einlagig sein, und es kann eine Abdeckplatte, wie sie in Fig. 1 vor der LED 2 mit einer dünnen Linie gezeigt ist, in Abstrahlrichtung aufgeklebt sein. Das Platikspritzgußteil hat in der dargestellten einfachen Form zwei seitliche Schenkel. Die Klebebereiche sind in der Ausführungsform nach Fig. 1 in den beiden Schenkeln als Mulden 4a ausgeformt. Sie liegen entsprechenden Andrückflächen in dem die Leuchte aufnehmenden Karosserieteil 5 gegenüber. Darüber hinaus kann das Gehäuse einen Klebebereich 4b entlang des Umfangs seiner Vorderfläche aufweisen. Die Mulde 4a dient dazu, das Klebematerial aufzunehmen und ihm einen gewissen Halt zu geben, so daß das Klebematerial beim Einführen der Leuchte 1 in das Karosserieteil 5 nicht unbeabsichtigt verschoben wird. Dabei kann das Klebematerial zusätzlich durch Erwärmen etwas verflüssigt werden. Wenn die Leuchte in ihrer endgültigen Position in dem Karosserieteil ist, härtet das Klebematerial aus und sorgt für eine feste Verbindung der Leuchte 1 mit dem Karosserieteil 5. Das Klebematerial in der Mulde 4a stellt somit die mechanisch stabile Verbindung zwischen Leuchte 1 und Karosserieteil 5 sicher.

Das Klebematerial kann neben der Verwendung als Mittel zum Verbinden zweier Komponenten jedoch auch als Formgeber verwendet werden. Dazu ist bei der Ausführungsform der erfindungsgemäßen Fahrzeugleuchte 1 in Fig. 1 als weiterer Klebebereich eine um das Gehäuse der Leuchte umlaufende Nut 4b vorgesehen. Diese Nut hat im Querschnitt vorzugsweise im wesentlichen die Form eines Viertelkreises. In dieser Nut wird eine Rolle Klebematerial vor dem Einbau der Leuchte 1 in das Karosserieteil 5 angeordnet. Nach dem Einbau wird das Klebematerial für eine vorgegebene Zeit auf eine vorgegebene Temperatur gebracht, so daß es leichtflüssiger wird. In diesem Zustand verbindet es sich mit dem Material des Karosserieteils 5, z. B. Metall, und bildet mit diesem eine glatte Oberfläche, auch wenn das Karosserieteil wie in Fig. 1 gezeigt eine scharfe Kante hat. Nach dem Abkühlen und Festwerden erfüllt das Klebematerial in der Nut 4b der Leuchte somit zwei Aufgaben, nämlich einmal die Herstellung einer Verbindung zwischen Leuchte 1 und Karosserieteil 5 und zum anderen die Anpassung der unterschiedlichen Formen der Leuchte 1 und des Karosserieteils 5 aneinander.

Die Leuchte 1 ist in der Vorderansicht in Fig. 2 dargestellt. Neben den kreisförmigen Reflektoren für drei LEDs (2, Fig. 1) ist die umlaufende Nut 4b gezeigt. In dieser Darstellung bedeutet die Nut, daß der äußere Rand gegenüber dem mit dünnerer Linie dargestellten inneren Rand der Leuchte, der in der Zeichenebene liegt, etwas zurücktritt. Damit läßt sich die Rolle Klebematerial um die Leuchte 1 herumlegen, sei es vor dem Einbau der Leuchte in das Karosserieteil oder nach dem Einbau. Nach der Anordnung der Leuchte 1 in der Aussparung in dem Karosserieteil 5 wird dann das Klebematerial aufgeheizt, verflüssigt und abkühlen und aushärten gelassen. Die Vorderfläche der Leuchte 1 paßt sich so anschließend ohne Kanten an das Karosserieteil 5 an.

Im eingebauten Zustand greifen im übrigen der erste und zweite Anschlußdraht 2a und 2b der LED 2 in die erste und zweite Buchse 6a und 6b in dem Karosserieteil 5 und stellen den elektrischen Kontakt zu einer in Fig. 1 angedeuteten Stromquelle sicher. Die beiden Anschlußbuchsen 6a und 6b sind vorzugsweise in einem Sockel eingebaut, der vom Boden der Aussparung, in die die erfindungsgemäße Leuchte 1 in dem Karosserieteil 5 eingebaut wird, wie in Fig. 1 dargestellt vorspringt. Dies erhöht die Sicherheit beim Einbau der Leuchte, und durch das Zusammenwirken von Leuchte und Sockel können die beiden Schenkel der Leuchte mit der Vertiefung 4a auseinander und gegen die Andrückflächen des Karosserieteils 5 gedrückt werden. Zu diesem Zweck kann der Sockel in Richtung Leuchte 1 konisch zulaufen. Außerdem ist es günstig für einen vereinfachten Einbau, wenn die Leuchte 1 im Querschnitt in Einbaurichtung konisch zuläuft.

### BEZUGSZEICHENLISTE

- **1**: Fahrzeugleuchte
- **2**: LED
- **2a**: erster Anschlußdraht der LED
- **2b**: zweiter Anschlußdraht der LED
- **3**: Reflektor für LED
- **4a**: erste Vertiefung zur Aufnahme von Klebematerial
- **4b**: zweite Vertiefung zur Aufnahme von Klebematerial
- **5**: Karosserieteil, in das die Fahrzeugleuchte eingebaut wird
- **6a**: erste Buchse für ersten Anschlußdraht von LED
- **6b**: zweite Buchse für zweiten Anschlußdraht von LED

## Patentansprüche

1. Fahrzeugleuchte (1) mit einem Gehäuse zur Aufnahme mindestens einer lichtemittierenden Diode (2), wobei das Gehäuse mehrere Klebebereiche (4a, 4b) zur Aufnahme von Klebematerial aufweist, **dadurch gekennzeichnet, daß** die Klebebereiche (4a, 4b) als Vertiefungen ausgebildet sind und in den Vertiefungen (4a, 4b) Heizdrähte angeordnet sind, durch die das Klebematerial bis zu seiner Verflüssigung aufheizbar ist.

2. Fahrzeugleuchte nach Anspruch 1, **dadurch gekennzeichnet, daß** die Klebebereiche (4a, 4b) so geformt sind, daß das Gehäuse formschlüssig mit einem die Leuchte (1) aufnehmenden Karosserieteil (5) abschließt.

## Claims

1. Vehicle lamp (1) having a housing for accommodating at least one light-emitting diode (2), the housing having a plurality of bonding regions (4a, 4b) for holding adhesive material, **characterized in that** the bonding regions (4a, 4b) are constructed as depressions, and there are arranged in the depressions (4a, 4b) heating wires which can be used to heat up the adhesive material until it liquefies.

2. Vehicle lamp according to Claim 1, **characterized in that** the bonding regions (4a, 4b) are formed such that the housing terminates in a form-fitting fashion with a body part (5) holding the lamp (1).

## Revendications

1. Feu pour véhicule (1) avec un boîtier destiné à recevoir au moins une diode électroluminescente (2), dans lequel le boîtier présente plusieurs zones adhésives (4a, 4b) destinées à recevoir une matière adhésive, **caractérisé en ce que** les zones adhésives (4a, 4b) sont en forme de creux et dans les creux (4a, 4b) sont disposés des fils chauffants par lesquels la matière adhésive peut être chauffée jusqu'à son point de fluidification.

2. Feu pour véhicule suivant la revendication 1, **caractérisé en ce que** les zones adhésives (4a, 4b) sont façonnées de telle manière que le boîtier s'assemble par emboîtement avec une pièce de la carrosserie (5) recevant le feu (1).
